# FASCICULE DE BREVET EUROPEEN

(11) **EP 3 679 554 B1**
(45) Date de publication et mention de la délivrance du brevet: **17.11.2021**
(21) Numéro de dépôt: 18753193.4
(22) Date de dépôt: 16.08.2018
(51) Int. Cl.: H04B 7/185

(54) **SYSTÈME DE SURVEILLANCE D'UN AÉRONEF**
FLUGZEUGÜBERWACHUNGSSYSTEM
AIRCRAFT MONITORING SYSTEM

(30) Priorité: 06.09.2017 FR 1758213
(43) Date de publication de la demande: 15.07.2020
(73) Titulaire: Safran Electronics & Defense, 75015 Paris (FR)
(72) Inventeur: FANTON, Nicolas, 77550 Moissy-Cramayel (FR); JEANDON, Thiebault, 77550 Moissy-Cramayel (FR); COUTURIER, Emmanuel, 77550 Moissy-Cramayel (FR)
(74) Mandataire: Lavaud, Thomas
(86) Numéro de dépôt international: PCT/EP2018/072194
(87) Numéro de publication internationale: WO 2019/048203

(56) Documents cités:
- WO-A1-02/052818
- WO-A1-2013/056136
- FR-A1- 3 045 905

## Description

L'invention concerne le domaine des systèmes de surveillance d'un aéronef.

### ARRIERE PLAN DE L'INVENTION

Un système de surveillance d'un aéronef comporte classiquement un ou plusieurs capteurs qui surveillent un
ou plusieurs paramètres de l'aéronef. Le document FR3045905 décrit un système de surveillance d'un aéronef comprenant un dispositif de mesure autonome comprenant des capteurs qui communiquent avec un boîtier principal par le biais d'un réseau tel que Sigfox ou LoRa.

Un tel système de surveillance est notamment utilisé pour détecter la survenue d'une panne, ou bien pour anticiper la survenue d'une panne en permettant l'analyse de l'évolution d'un ou de plusieurs paramètres de l'aéronef (on parle alors de *health monitoring*)*.* Un tel système de surveillance peut aussi permettre de valider la présence d'un équipement ou d'un objet quelconque dans l'aéronef.

Au moment de la conception de l'aéronef, l'intégration d'un système de surveillance est souvent complexe. En effet, les capteurs doivent parfois être positionnés dans des endroits difficiles d'accès, et la remontée des mesures réalisées par les capteurs vers un concentrateur de données ou vers un équipement de maintenance quelconque est souvent complexe à mettre en œuvre. Les câbles auxquels ces capteurs sont connectés peuvent présenter une masse importante et sont parfois complexes à installer. Les câbles tendent aussi à réduire la fiabilité du système de surveillance, notamment lorsqu'ils cheminent dans des environnements où règnent de fortes contraintes environnementales (température, vibrations, chocs, etc.).

La certification du système de surveillance est complexe à réaliser, car les capteurs et les câbles sont susceptibles d'interagir avec de nombreux équipements externes d'autres systèmes, soit volontairement via des connexions électriques, soit involontairement via la génération de perturbations diverses.

L'intégration et la certification d'un nouveau système de surveillance dans un aéronef préexistant sont encore plus complexes à réaliser. En effet, dans ce cas, l'aéronef préexistant n'a pas été conçu pour accueillir le nouveau système de surveillance. Le nouveau système de surveillance doit donc être intégré sans perturber des équipements externes au système de surveillance, qui n'ont pas été dimensionnés pour fonctionner en présence du nouveau système de surveillance. On note que cette problématique est relativement importante, car la durée du cycle de vie d'un aéronef entre le début de sa conception et sa fin de vie atteint plusieurs dizaines d'années. Il est donc fondamental d'être capable d'intégrer et de certifier un nouveau système de surveillance, plus efficace, dans un aéronef préexistant.

### OBJET DE L'INVENTION

L'invention a pour objet de faciliter l'intégration et la certification d'un système de surveillance dans un aéronef en cours de conception ou dans un aéronef préexistant.

### RESUME DE L'INVENTION

En vue de la réalisation de ce but, on propose un système de surveillance d'un aéronef, comprenant des équipements de mesure et une borne de réception LPWAN formant un réseau LPWAN, la borne de réception LPWAN étant en outre adaptée à être connectée à un équipement de maintenance de l'aéronef, chaque équipement de mesure comprenant :
- un capteur agencé pour mesurer un paramètre de l'aéronef ;
- une antenne LPWAN et un émetteur LPWAN agencés pour transmettre des données de mesure produites par le capteur à la borne de réception LPWAN ;
- une source d'alimentation autonome qui alimente l'équipement de mesure ;
- un organe de coupure principal monté entre la source d'alimentation autonome et l'émetteur LPWAN ;
- un composant de gestion principal agencé pour surveiller des paramètres de fonctionnement de l'émetteur LPWAN et pour ouvrir et fermer sélectivement l'organe de coupure principal en fonction des paramètres de fonctionnement.

Comme chaque équipement de mesure comporte un émetteur LPWAN pour transmettre les données de mesure, et une source d'alimentation autonome pour son alimentation, seule la borne de réception LPWAN doit être connectée au réseau de bord. L'intégration et la certification du système de surveillance selon l'invention dans un nouvel aéronef ou dans un aéronef préexistant sont ainsi simplifiées.

Dans les activités de certification, la compatibilité des équipements susceptibles d'émettre une énergie radiofréquence avec la norme aéronautique RTCA DO-160 Section 21 est fondamentale. Cette norme impose notamment que le niveau d'énergie radiofréquence émis soit inférieur, pour chaque fréquence, à un seuil prédéterminé.

Grâce à l'organe de coupure principal monté entre la source d'alimentation autonome et l'émetteur LPWAN, le composant de gestion principal peut désactiver l'émetteur LPWAN en coupant physiquement son alimentation.

Le composant de gestion principal peut donc désactiver de manière certaine l'émetteur LPWAN en cas de problème de fonctionnement susceptible de conduire à l'émission d'une énergie radiofréquence incompatible avec la norme précédemment citée.

On assure ainsi que l'équipement de mesure ne perturbera en aucun cas des équipements externes, et on s'assure de la conformité du système de surveillance avec les exigences de certification.

D'autres caractéristiques et avantages de l'invention ressortiront à la lecture de la description qui suit.

### BREVE DESCRIPTION DES DESSINS

Il sera fait référence aux dessins annexés, parmi lesquels :
- la figure 1 représente un système de surveillance selon l'invention ;
- la figure 2 représente un équipement de mesure du système de surveillance selon l'invention.

### DESCRIPTION DETAILLEE DE L'INVENTION

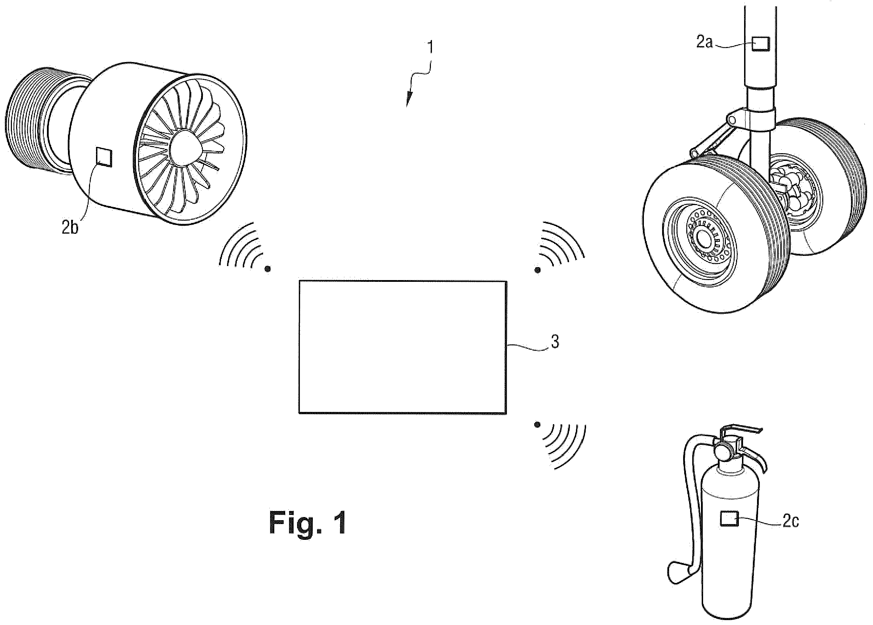

En référence à la figure 1, le système de surveillance selon l'invention 1 est embarqué dans un aéronef.

Le système de surveillance 1 comporte des équipements de mesure 2a, 2b, 2c et une borne de réception LPWAN 3. Les équipements de mesure 2a, 2b, 2c et la borne de réception LPWAN 3 forment un réseau LPWAN. Le sigle LPWAN signifie *Low Power Wide Area Network,* en anglais. Le LPWAN est une technologie permettant une communication radiofréquence de données à bas débit et longue distance.

Le réseau LPWAN est ici un réseau LoRa. Le réseau LPWAN pourrait cependant être un réseau LPWAN différent, par exemple un réseau Sigfox.

Les équipements de mesure 2a, 2b, 2c sont ici tous identiques au niveau matériel (*hardware*). Les fonctions logicielles implémentées dépendent de l'application dans laquelle chaque équipement de mesure 2 est utilisé.

Chaque équipement de mesure 2 fonctionne selon deux modes de fonctionnement : un premier mode de fonctionnement et un deuxième mode de fonctionnement. Dans le premier mode de fonctionnement, l'émission de signaux LPWAN par l'équipement de mesure 2 est désactivée. Dans le deuxième mode de fonctionnement, l'émission de signaux LPWAN par l'équipement de mesure 2 est activée.

Le mode de fonctionnement utilisé dépend de la phase de vol dans laquelle se trouve l'aéronef. Le premier mode de fonctionnement correspond à des phases de vol prédéterminées comprenant la phase de roulage initiale, la phase de décollage, la phase de montée, la phase de croisière, la phase de descente, la phase d'approche, la phase d'atterrissage et la phase de roulage finale. Le deuxième mode de fonctionnement correspond à la phase de parking de l'aéronef.

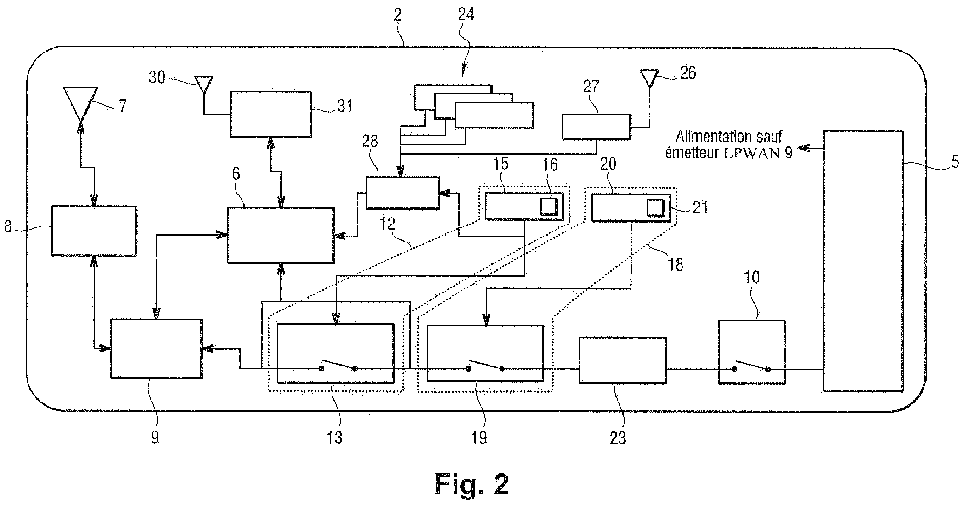

En référence à la figure 2, chaque équipement de mesure 2 comporte une source d'alimentation autonome 5 qui alimente les composants de l'équipement de mesure 2. Il n'est donc pas nécessaire de relier l'équipement de mesure 2 à une source d'alimentation externe.

La source d'alimentation autonome 5 comporte ici une pile à faible courant de fuite (par ex. du type Lithium Thionyl Chloride).

L'équipement de mesure 2 comporte de plus un composant de gestion principal 6. Le composant de gestion principal 6 gère le fonctionnement de l'ensemble de l'équipement de mesure 2. Le composant de gestion principal 6 est ici un microcontrôleur, mais pourrait être un composant différent, par exemple un FPGA, un ASIC, un processeur, etc.

L'équipement de mesure 2 comporte de plus une antenne LPWAN 7, un filtre passe-bande 8 et un émetteur LPWAN 9.

Le filtre passe-bande 8 est positionné entre l'émetteur LPWAN 9 et l'antenne LPWAN 7. Le filtre passe-bande 8 laisse passer une bande de fréquence prédéterminée et atténue fortement les fréquences à l'extérieur de la bande de fréquence prédéterminée. La bande de fréquence prédéterminée est ici la bande 863 MHz-928 MHz. La réjection à 960 MHz du filtre passe-bande 8 est égale à au moins 60dB. Dans la bande passante utile, le filtre passe-bande doit atténuer le moins possible.

Le composant de gestion principal 6 surveille en permanence des paramètres de configuration de l'émetteur LPWAN 9. En particulier, le composant de gestion principal 6 surveille le paramétrage de la puissance d'émission des signaux LPWAN générés par l'émetteur LPWAN 9, ainsi que le paramétrage de la fréquence d'émission des signaux LPWAN.

L'équipement de mesure 2 comporte de plus un organe de coupure principal 10 monté entre la source d'alimentation autonome 5 et l'émetteur LPWAN 9.

Tous les composants de l'équipement de mesure 2 sont donc alimentés directement par la source d'alimentation autonome 5, à l'exception de l'émetteur LPWAN 9 qui est alimenté par la source d'alimentation autonome 5 via l'organe de coupure principal 10.

Le composant de gestion principal 6 ouvre et ferme sélectivement l'organe de coupure principal 10. L'organe de coupure principal 10 est normalement ouvert (coupure de l'alimentation du l'émetteur LPWAN 9). L'organe de coupure se ferme (alimentation de l'émetteur LPWAN 9 seulement lorsqu'une émission est nécessaire et autorisé).

En cas de détection d'erreur de configuration de l'émetteur LPWAN 9, le composant de gestion principal 6 génère, dans ce cas, un message de panne qui localise la panne dans l'émetteur LPWAN 9.

Par ailleurs, le composant de gestion principal 6 assure que l'émetteur LPWAN 9 n'émet pas pendant plus de 3 secondes toutes les 3600 secondes en ouvrant l'organe de coupure principal 10 à l'issue des 3 secondes . On limite ainsi l'énergie radiofréquence émise par l'équipement de mesure 2.

L'équipement de mesure 2 comporte de plus une première chaîne de détection de fonctionnement 12. La première chaîne de détection de fonctionnement 12 comprend un premier organe de coupure secondaire 13 monté entre la source d'alimentation autonome 5 et l'émetteur LPWAN 9, ainsi qu'un accéléromètre 15 et un premier composant de gestion secondaire 16 connecté à l'accéléromètre 15.

Le premier composant de gestion secondaire 16 est agencé pour ouvrir et fermer sélectivement le premier organe de coupure secondaire 13.

L'accéléromètre 15 est un capteur qui produit des mesures d'accélération subie par l'équipement de mesure 2. Le premier composant de gestion secondaire 16 acquiert les mesures d'accélération et peut détecter, grâce aux mesures d'accélération, que l'aéronef se trouve dans une phase de vol correspondant au premier mode de fonctionnement de l'équipement de mesure 2.

Il convient alors de désactiver l'émission de signaux LPWAN. Le premier composant de gestion secondaire 16 ouvre le premier organe de coupure secondaire 13. L'alimentation de l'émetteur LPWAN 9 est donc coupée, et donc l'émetteur LPWAN 9 est désactivé et ne peut plus émettre de signaux LPWAN. L'équipement de mesure 2 passe ainsi dans le premier mode de fonctionnement.

L'équipement de mesure 2 comporte en outre une deuxième chaîne de détection de fonctionnement 18. La deuxième chaîne de détection de fonctionnement 18 comprend un deuxième organe de coupure secondaire 19 monté entre la source d'alimentation autonome 5 et l'émetteur LPWAN 9, ainsi qu'un gyroscope 20 et un deuxième composant de gestion secondaire 21 connecté au gyroscope 20.

Le deuxième composant de gestion secondaire 21 est agencé pour ouvrir et fermer sélectivement le deuxième organe de coupure secondaire 19.

Le gyroscope 20 est un capteur qui produit des mesures de position angulaire de l'équipement de mesure 2. Le deuxième composant de gestion secondaire 21 acquiert les mesures de position angulaire et peut détecter, grâce aux mesures de position angulaire, que l'aéronef se trouve dans une phase de vol correspondant au premier mode de fonctionnement de l'équipement de mesure 2.

Il convient alors de désactiver l'émission de signaux LPWAN. Le deuxième composant de gestion secondaire 21 ouvre le deuxième organe de coupure secondaire 19. L'alimentation de l'émetteur LPWAN 9 est donc coupée, et donc l'émetteur LPWAN 9 est désactivé et ne peut plus émettre de signaux LPWAN. L'équipement de mesure 2 passe donc dans le premier mode de fonctionnement.

Le premier composant de gestion secondaire 16 et le deuxième composant de gestion secondaire 21 commandent donc de manière indépendante la coupure de l'alimentation de l'émetteur LPWAN 9, à partir de mesures indépendantes de deux paramètres distincts (accélération et position angulaire).

L'équipement de mesure 2 comporte de plus un composant de limitation de courant 23 monté entre l'organe de coupure principal 10 et l'émetteur LPWAN 9. Le composant de limitation de courant 23 est dimensionné pour fournir un courant maximal permettant à l'émetteur LPWAN 9 d'émettre un message à la puissance requise (et non plus), c'est à dire de générer des signaux LPWAN à une puissance limitée. Le composant de limitation de courant 23 empêche donc l'émetteur LPWAN 9 de générer des signaux LPWAN avec une puissance supérieure à une puissance maximale prédéterminée. On note que la puissance maximale prédéterminée comprend une marge supplémentaire représentant la puissance de fonctionnement du composant. Cette marge de fonctionnement permet d'assurer que la puissance est suffisante pour émettre un message, quelles que soient les conditions de fonctionnement de l'équipement de mesure 2 : conditions environnementales, tolérance des composants, vieillissement des composants, etc.

Le composant de gestion principal 6 surveille la limitation de courant réalisée par le composant de limitation de courant 23. Lorsque l'intensité dans le composant de limitation de courant 23 est supérieure au courant maximal, le composant de gestion principal 6 ouvre l'organe de coupure principal 10.

L'action conjointe du composant de limitation de courant 23 et de l'organe de coupure principal 10, qui est ouvert par le composant de gestion principal 6 à l'issue des 3 secondes d'émission (voir plus tôt), définit l'énergie maximale prédéterminée fournie pour émettre des signaux LPWAN. L'énergie requise est inférieure ou égale à l'énergie maximale prédéterminée.

L'énergie maximale correspond ici à une puissance d'émission de 25mW pendant une durée ΔT correspondant à la durée d'émission d'un message.

L'équipement de mesure 2 comporte en outre plusieurs capteurs 24, parmi lesquels un capteur de température, un capteur de pression, un capteur d'humidité et un capteur de choc.

Tous les capteurs 24 ne sont pas nécessairement actifs. L'utilisation des capteurs 24 dépend de l'application dans laquelle est utilisé l'équipement de mesure 2.

L'équipement de mesure 2 comporte de plus une antenne GPS 26 (pour *Global Positioning System*) et un récepteur GPS 27. Le récepteur GPS 27 est un capteur qui produit des mesures de position qui permettent d'estimer une position de l'équipement de mesure 2.

Des données de mesures sont acquises et enregistrées par un module d'enregistrement de données 28. Les données de mesure comprennent des mesures de température, de pression, d'humidité et de choc/accélération produites par les capteurs 24, des mesures de position angulaire produites par le gyroscope 20 et des mesures de position produites par le récepteur GPS 27.

Le composant de gestion principal 6 est connecté au module d'enregistrement de données 28 et produit des messages d'alerte lorsqu'il détecte des conditions anormales à partir des données de mesure, par exemple une température trop important régnant à l'intérieur d'une nacelle de moteur.

L'équipement de mesure 2 comporte de plus une antenne RFID 30 (pour *Radio Frequency Identification*) et un émetteur RFID passif 31 comprenant une mémoire RFID. Le composant de gestion principal 6 peut stocker des données quelconques dans la mémoire RFID.

Ainsi, lorsqu'un opérateur approche un lecteur RFID externe de l'équipement de mesure 2, le lecteur RFID externe fournit une énergie électrique via l'antenne RFID 30 à l'émetteur RFID passif 31. L'émetteur RFID passif 31 est alors alimenté et activé. L'émetteur RFID passif 31 transmet les données contenues dans la mémoire RFID au lecteur RFID externe via l'antenne RFID 30.

Le composant de gestion principal 6, le premier composant de gestion secondaire 16 et le deuxième composant de gestion secondaire 21 mettent par ailleurs en œuvre une fonction de surveillance interne de l'équipement de mesure 2.

La fonction de surveillance interne consiste à tester l'équipement de mesure 2, à diagnostiquer une panne dans l'équipement de mesure 2, et à identifier un composant en panne. Le premier composant de gestion secondaire 16 surveille plus particulièrement la première chaîne de détection de fonctionnement 12. Le deuxième composant de gestion secondaire 21 surveille plus particulièrement la deuxième chaîne de détection de fonctionnement 18.

Lorsqu'une panne survient dans l'équipement de mesure 2, le composant de gestion principal 6 ouvre l'organe de coupure principal 10, le premier composant de gestion secondaire 16 ouvre le premier organe de coupure secondaire 13, ou le deuxième composant de gestion secondaire 21 ouvre le deuxième organe de coupure secondaire 19.

L'émetteur LPWAN 9 n'est alors plus alimenté, et l'émission de signaux LPWAN est impossible. L'équipement de mesure 2 passe donc dans le premier mode de fonctionnement.

Un message de panne est alors stocké par le composant de gestion principal 6 dans la mémoire RFID. Il est donc possible d'obtenir des informations sur la panne même en l'absence d'émission de signaux LPWAN.

Le composant de gestion principal 6 détecte par ailleurs la phase de vol dans laquelle se trouve l'aéronef en utilisant les données de mesure fournies par les capteurs 24, l'accéléromètre 15, le gyroscope 20 et le récepteur GPS 27.

Le composant de gestion principal 6 adapte alors à la phase de vol dans laquelle se trouve l'aéronef la fréquence d'échantillonnage des capteurs 24, de l'accéléromètre 15, du gyroscope 20 et du récepteur GPS 27.

L'adaptation à la phase de vol de la fréquence d'échantillonnage permet de réduire la fréquence d'échantillonnage pour une phase de vol qui ne nécessite pas des mesures à une fréquence élevée, ce qui permet de réduire la consommation électrique de l'équipement de mesure 2 et donc d'augmenter la durée de son autonomie.

On sait par exemple que les nacelles de moteur sont fortement sollicitées au cours de certaines phases de vol. Une nacelle subit en particulier des variations de température et des niveaux de vibration importants au cours des phases de décollage et de montée de l'aéronef, et des variations de pression importantes au cours des phases de descente, d'approche et d'atterrissage de l'aéronef. Il convient donc, au cours de ces phases, d'utiliser une fréquence d'échantillonnage importante des capteurs de température, de pression et de choc. Cette fréquence d'échantillonnage peut par contre être réduite lors des autres phases de vol.

On cite maintenant des applications dans lesquelles peuvent être utilisés les équipements de mesure.

Les équipements de mesure 2 comprennent un premier équipement de mesure 2a, un deuxième équipement de mesure 2b et un troisième équipement de mesure 2c.

Le premier équipement de mesure 2a est positionné sur un atterrisseur de l'aéronef. Le premier équipement de mesure 2a est destiné à mesurer un paramètre de l'aéronef, en l'occurrence des chocs subis par l'aéronef au cours de chaque atterrissage.

Le premier équipement de mesure 2a produit donc des données de mesure comprenant les mesures de choc, et enregistre les données de mesure. Le premier équipement de mesure 2a peut aussi détecter, à partir des mesures de choc, un *hard landing* (que l'on peut traduire par « atterrissage dur »). Le premier équipement de mesure 2a produit un message d'alerte lorsqu'un *hard landing* est détecté.

Les données de mesure, les messages d'alerte et les messages de panne sont transmis par le premier équipement de mesure 2a à la borne de réception LPWAN 3. Les données de mesure et les messages d'alerte permettent notamment de réaliser une maintenance prédictive de l'atterrisseur et de réaliser une surveillance globale des atterrisseurs d'une flotte d'aéronefs.

Le deuxième équipement de mesure 2b est positionné sur une nacelle d'un moteur de l'aéronef. Le deuxième équipement de mesure 2b est destiné à mesurer des paramètres de l'aéronef, en l'occurrence une température et une pression régnant dans la nacelle. Le deuxième équipement de mesure 2b produit donc des données de mesure comprenant les mesures de température et les mesures de pression, et enregistre les données de mesure. Le deuxième équipement de mesure 2b peut aussi détecter, à partir des mesures de température et de pression, des conditions anormales de fonctionnement. Le deuxième équipement de mesure 2b produit un message d'alerte lorsque des conditions anormales sont détectées.

Les données de mesure, les messages d'alerte et les messages de panne sont transmis par le deuxième équipement de mesure 2b à la borne de réception LPWAN 3. Les données de mesure et les messages d'alerte permettent notamment de réaliser une maintenance prédictive de la nacelle et du moteur et de réaliser une surveillance globale des nacelles d'une flotte d'aéronefs.

Le troisième équipement de mesure 2c est positionné sur un conteneur (ou ULD, pour *Unit Load Device*) positionné dans l'aéronef.

Le troisième équipement de mesure 2c est destiné à "mesurer les conditions climatiques à l'intérieur du conteneur, en l'occurrence la pression, température, choc, humidité sur lequel est positionné le troisième équipement de mesure 2c.

Le troisième équipement de mesure 2c produit donc des données de mesure et enregistre les données de mesure.

Les données de mesure, les messages d'alerte et les messages de panne sont transmis par le troisième équipement de mesure 2c à la borne de réception LPWAN 3. Les données de mesure permettent de géo-localiser avec une bonne précision le conteneur pour assurer que le conteneur est bien positionné dans l'aéronef.

La borne de réception LPWAN 3, quant à elle, gère le réseau LPWAN formé par les équipements de mesure 2 et par la borne de réception LPWAN 3.

La borne de réception LPWAN 3 comporte un émetteur-récepteur LPWAN. La borne de réception LPWAN met en œuvre une communication unidirectionnelle sans fil avec les équipements de mesure : les équipements de mesure 2 transmettent des signaux LPWAN à la borne de réception LPWAN 3 qui reçoit lesdits signaux LPWAN.

La borne de réception LPWAN 3 reçoit et enregistre les données de mesure, les messages d'alerte et les messages de panne transmis à la borne de réception LPWAN 3 par les équipements de mesure 2.

La borne de réception LPWAN 3 est en outre connectée au réseau de bord de l'aéronef. La borne de réception LPWAN 3 est reliée par un câble d'alimentation à une source de puissance de l'aéronef, qui alimente la borne de réception LPWAN 3. La borne de réception LPWAN 3 est par ailleurs reliée par un câble de communication à un équipement de maintenance de l'aéronef. La borne de réception LPWAN 3 transmet les données de mesure, les messages d'alerte et les messages de panne à l'équipement de maintenance de l'aéronef.

L'équipement de maintenance fait partie d'un système de maintenance de l'aéronef. Le rôle du système de maintenance est notamment de recevoir, de traiter et de transmettre à un premier équipement au sol les données de mesure, les messages d'alerte et les messages de panne. Les données de mesure, les messages d'alerte et les messages de panne permettent alors d'organiser des opérations de maintenance, qui comprennent par exemple le remplacement, le réglage, le test, la surveillance d'un équipement.

La borne de réception LPWAN 3 peut par ailleurs être directement connectée à un deuxième équipement au sol comportant un émetteur-récepteur LPWAN. Le premier équipement au sol et le deuxième équipement au sol sont possiblement un même équipement.

La borne de réception LPWAN 3 peut communiquer avec le deuxième équipement au sol lorsque l'aéronef est au sol, mais aussi lorsque l'aéronef est en vol.

Ici, la borne de réception LPWAN 3 décharge l'ensemble des données de mesure, les messages d'alertes et les messages de panne provenant de tous les équipements de mesure 2 du réseau LPWAN en les transmettant au deuxième équipement au sol lorsque l'aéronef est au sol et à l'arrêt (en phase de parking).

On décrit maintenant certains avantages procurés par le système de surveillance selon l'invention.

Les équipements de mesure 2, qui communiquent avec la borne de réception LPWAN 3 par une liaison sans-fil et qui sont équipés d'une source d'alimentation autonome 5, sont intégrés mécaniquement à différentes zones de l'aéronef sans interface physique avec le réseau de bord de l'aéronef. On simplifie ainsi l'intégration du système de surveillance 1 dans l'aéronef, on réduit sa masse (grâce à l'absence de câble), et on augmente sa fiabilité. Seule la borne de réception LPWAN 3 est donc connectée au réseau avion. Ainsi, seule la borne de réception LPWAN 3 doit subir une intégration au réseau avion, qui nécessite des travaux de certification complexes.

La transmission des signaux LPWAN nécessite, pour chaque équipement, une faible puissance d'émission.

On assure ainsi que les équipements de mesure 2 peuvent être installés dans l'aéronef sans perturber des équipements externes, et ce, sans qu'il soit pour cela nécessaire d'étudier en détail l'impact de l'émission d'énergie radiofréquence dans la bande de fréquence prédéterminée 863 MHz-928 MHz sur l'ensemble des équipements externes potentiellement concernés.

On a indiqué que l'émission de signaux LPWAN n'était possible que dans le deuxième mode de fonctionnement, lorsque l'aéronef se trouve dans la phase de parking de l'aéronef. On note que, même si une panne de la première chaîne de détection de fonctionnement 12 ou de la deuxième chaîne de détection de fonctionnement 18 survient, qui empêche la désactivation de l'émission de signaux LPWAN alors que l'aéronef se trouve dans une phase de vol correspondant au premier mode de fonctionnement, l'émission est malgré tout limitée à un niveau inférieur au gabarit de la norme aéronautique RTCA DO-160 Section 21. L'émission ne perturbe donc pas les équipements externes.

La consommation électrique de chaque équipement de mesure 2 est par ailleurs relativement faible, grâce à l'utilisation de la technologie LPWAN. On obtient ainsi des équipements de mesure 2 qui présentent une autonomie importante, sans qu'il soit nécessaire d'utiliser une source d'alimentation autonome particulièrement coûteuse ou encombrante.

Bien entendu, l'invention n'est pas limitée au mode de réalisation décrit mais englobe toute variante entrant dans le champ de l'invention telle que définie par les revendications.

On a indiqué que les équipements de mesure sont tous identiques au niveau matériel. Ce n'est pas nécessairement le cas. Chaque équipement de mesure pourrait par exemple être équipé d'un capteur distinct dépendant de l'application dans laquelle l'équipement de mesure est utilisé.

On a indiqué que la borne de réception LPWAN met en œuvre une communication unidirectionnelle avec les équipements de mesure. Cette communication pourrait être bidirectionnelle, et l'émetteur LPWAN d'un équipement de mesure pourrait être un émetteur-récepteur LPWAN.

On a évoqué un premier mode de fonctionnement et un deuxième mode de fonctionnement de l'équipement de mesure. Dans le premier mode de fonctionnement, l'émission de signaux LPWAN par l'équipement de mesure est désactivée. Il est parfaitement possible qu'un équipement de mesure fonctionne selon un seul mode de fonctionnement, et que l'émission de signaux LPWAN ne soit pas désactivée. On peut imaginer de désactiver l'émission de signaux LPWAN au cours de phases de vol différentes de celles évoquées.

On a indiqué que la source d'alimentation autonome comporte une pile à faible courant de fuite. On pourrait, alternativement, utiliser une ou des piles différentes, et même des moyens de récupération d'énergie (*energy harvesting*)*.* Les moyens de récupération d'énergie transforment par exemple des vibrations générées par un moteur en énergie électrique qui est utilisée pour alimenter l'équipement de mesure.

## Revendications

1. Système de surveillance d'un aéronef, comprenant des équipements de mesure (2) et une borne de réception LPWAN (3) formant un réseau LPWAN (1), la borne de réception LPWAN étant en outre adaptée à être connectée à un équipement de maintenance de l'aéronef, chaque équipement de mesure comprenant :
- un capteur (15 ; 20 ; 24 ; 27) agencé pour mesurer un paramètre de l'aéronef ;
- une antenne LPWAN (7) et un émetteur LPWAN (9) agencés pour transmettre des données de mesure produites par le capteur à la borne de réception LPWAN ;
- une source d'alimentation autonome (5) qui alimente l'équipement de mesure ;
le système étant **caractérisé en ce que** chaque équipement de mesure comprend:
- un organe de coupure principal (10) monté entre la source d'alimentation autonome et l'émetteur LPWAN ;
- un composant de gestion principal (6) agencé pour surveiller des paramètres de fonctionnement de l'émetteur LPWAN (9) et pour ouvrir et fermer sélectivement l'organe de coupure principal (10) en fonction des paramètres de fonctionnement.

2. Système de surveillance selon la revendication 1, dans lequel les paramètres de fonctionnement comprennent une puissance d'émission et une fréquence d'émission de signaux LPWAN générés par l'émetteur LPWAN (9), et dans lequel le composant de gestion principal (6) est agencé pour ouvrir l'organe de coupure principal (10) lorsque la puissance d'émission est supérieure à un seuil de puissance prédéterminé et/ou lorsque la fréquence d'émission est en dehors d'une bande de fréquence prédéterminée.

3. Système de surveillance selon la revendication 1, dans lequel l'équipement de mesure (2) comporte en outre un premier organe de coupure secondaire (13) monté entre la source d'alimentation autonome (5) et l'émetteur LPWAN (9), ainsi qu'un accéléromètre (15) et un premier composant de gestion secondaire (16) connecté à l'accéléromètre et agencé pour ouvrir le premier organe de coupure secondaire (13) lorsque le premier composant de gestion secondaire (16) détecte que l'aéronef se trouve dans une phase de vol prédéterminée.

4. Système de surveillance selon la revendication 1, dans lequel l'équipement de mesure (2) comporte en outre un deuxième organe de coupure secondaire (19) monté entre la source d'alimentation autonome (5) et l'émetteur LPWAN (9), ainsi qu'un gyroscope (20) et un deuxième composant de gestion secondaire (21) connecté au gyroscope et agencé pour ouvrir le deuxième organe de coupure secondaire (19) lorsque le deuxième composant de gestion secondaire (21) détecte que l'aéronef se trouve dans une phase de vol prédéterminée.

5. Système de surveillance selon la revendication 1, dans lequel l'équipement de mesure comporte en outre un composant de limitation de courant (23) monté entre l'organe de coupure principal (10) et l'émetteur LPWAN (9).

6. Système de surveillance selon la revendication 5, dans lequel une action conjointe du composant de limitation de courant (23) et de l'organe de coupure principale 10 permet de définir une énergie maximale prédéterminée pour émettre des signaux LPWAN.

7. Système de surveillance selon la revendication 1, dans lequel l'équipement de mesure est agencé pour détecter une phase de vol dans laquelle se trouve l'aéronef, et dans lequel une fréquence d'échantillonnage du capteur est adaptée en fonction de la phase de vol.

## Patentansprüche

1. Luftfahrzeugüberwachungssystem, umfassend Messgeräte (2) und einen LPWAN-Empfangsanschluss (3), die ein LPWAN-Netzwerk (1) bilden, wobei der LPWAN-Empfangsanschluss ferner angepasst ist, mit einem Wartungsgerät des Luftfahrzeugs verbunden zu werden, wobei jedes Messgerät umfasst:
- einen Sensor (15; 20; 24; 27), der ausgebildet ist, um einen Parameter des Luftfahrzeugs zu messen;
- eine LPWAN-Antenne (7) und einen LPWAN-Sender (9), die ausgebildet sind, um von dem Sensor erzeugte Messdaten an den LPWAN-Empfangsanschluss zu übertragen;
- eine autonome Versorgungsquelle (5), die das Messgerät speist; wobei das System **dadurch gekennzeichnet ist, dass** jedes Messgerät umfasst:
- ein Hauptunterbrechungsorgan (10), das zwischen der autonomen Versorgungsquelle und dem LPWAN-Sender geschaltet ist;
- eine Hauptsteuerungskomponente (6), die ausgebildet ist, um Betriebsparameter des LPWAN-Senders (9) zu überwachen und das Hauptunterbrechungsorgan (10) in Abhängigkeit von den Betriebsparametern selektiv zu öffnen und zu schließen.

2. Überwachungssystem nach Anspruch 1, bei dem die Betriebsparameter eine Sendeleistung und eine Sendefrequenz von LPWAN-Signalen umfassen, die von dem LPWAN-Sender (9) erzeugt werden, und bei dem die Hauptsteuerungskomponente (6) ausgebildet ist, um das Hauptunterbrechungsorgan (10) zu öffnen, wenn die Sendeleistung größer als ein vorbestimmter Leistungsschwellenwert ist und/oder wenn die Sendefrequenz außerhalb eines vorbestimmten Frequenzbandes ist.

3. Überwachungssystem nach Anspruch 1, bei dem das Messgerät (2) ferner ein erstes sekundäres Unterbrechungsorgan (13) umfasst, das zwischen die autonome Versorgungsquelle (5) und den LPWAN-Sender (9) geschaltet ist, sowie einen Beschleunigungsmesser (15) und eine erste sekundäre Steuerungskomponente (16), die mit dem Beschleunigungsmesser verbunden und ausgebildet ist, um das erste sekundäre Unterbrechungsorgan (13) zu öffnen, wenn das erste sekundäre Steuerungsorgan (16) erfasst, dass sich das Luftfahrzeug in einer vorbestimmten Flugphase befindet.

4. Überwachungssystem nach Anspruch 1, bei dem das Messgerät (2) ferner ein zweites sekundäres Unterbrechungsorgan (19) umfasst, das zwischen die autonome Versorgungsquelle (5) und den LPWAN-Sender (9) geschaltet ist, sowie ein Gyroskop (20) und eine zweite sekundäre Steuerungskomponente (21), die mit dem Gyroskop verbunden und ausgebildet ist, um das zweite sekundäre Unterbrechungsorgan (19) zu öffnen, wenn die zweite sekundäre Steuerungskomponente (21) erfasst, dass sich das Luftfahrzeug in einer vorbestimmten Flugphase befindet.

5. Überwachungssystem nach Anspruch 1, bei dem das Messgerät ferner eine Strombegrenzungskomponente (23) umfasst, die zwischen das Hauptunterbrechungsorgan (10) und den LPWAN-Sender (9) geschaltet ist.

6. Überwachungssystem nach Anspruch 5, bei dem eine gemeinsame Aktion der Strombegrenzungskomponente (23) und des Hauptunterbrechungsorgans (10) ein Definieren einer vorbestimmten maximalen Energie zum Senden von LPWAN-Signalen ermöglicht.

7. Überwachungssystem nach Anspruch 1, bei dem das Messgerät ausgebildet ist, um eine Flugphase zu erfassen, in der sich das Luftfahrzeug befindet, und bei dem eine Abtastfrequenz des Sensors in Abhängigkeit von der Flugphase angepasst ist.

## Claims

1. An aircraft surveillance system comprising an LPWAN network (1) made up of pieces of measuring equipment (2) and an LPWAN reception terminal (3), the LPWAN reception terminal also being adapted to be connected to maintenance equipment of the aircraft, each piece of measuring equipment comprising:
• a sensor (15; 20; 24; 27) arranged to measure a parameter of the aircraft;
• an LPWAN antenna (7) and an LPWAN transmitter (9) arranged to transmit measurement data produced by the sensor to the LPWAN reception terminal;
• an independent power source (5) that powers the piece of measuring equipment;
• a main cut-off member (10) connected between the independent power source and the LPWAN transmitter; and
• a main control component (6) arranged to monitor operating parameters of the LPWAN transmitter (9) and to open and close the main cut-off member (10) selectively as a function of the operating parameters.

2. A monitoring system according to claim 1, wherein the operating parameters comprise a transmission power and a transmission frequency for LPWAN signals generated by the LPWAN transmitter (9), and wherein the main control component (6) is arranged to open the main cut-off member (10) when the transmission power is greater than a predetermined power threshold and/or when the transmission frequency lies outside a predetermined frequency band.

3. A monitoring system according to claim 1, wherein the piece of measuring equipment (2) further comprises a first secondary cut-off member (13) connected between the independent power source (5) and the LPWAN transmitter (9), and an accelerometer (15) and a first secondary control component (16) connected to the accelerometer and arranged to open the first secondary cut-off member (13) when the first secondary control component (16) detects that the aircraft is in a predetermined stage of flight.

4. A monitoring system according to claim 1, wherein the piece of measuring equipment (2) further comprises a second secondary cut-off member (19) connected between the independent power source (5) and the LPWAN transmitter (9), and a gyro (20) and a second secondary control component (21) connected to the gyro and arranged to open the second secondary cut-off member (19) when the second secondary control component (21) detects that the aircraft is in a predetermined stage of flight.

5. A monitoring system according to claim 1, wherein the piece of measuring equipment further comprises a current-limiting component (23) connected between the main cut-off member (10) and the LPWAN transmitter (9).

6. A monitoring system according to claim 5, wherein combined action of the current-limiting component (23) and of the main cut-off member (10) serves to define a predetermined maximum energy for transmitting LPWAN signals.

7. A monitoring system according to claim 1, wherein the piece of measuring equipment is arranged to detect a stage of flight in which the aircraft is to be found, and wherein a sampling frequency for the sensor is adapted as a function of the stage of flight.
